# EUROPÄISCHE PATENTSCHRIFT

(11) **EP 3 153 277 B1**
(45) Veröffentlichungstag und Bekanntmachung des Hinweises auf die Patenterteilung: **03.10.2018**
(21) Anmeldenummer: 16186073.9
(22) Anmeldetag: 29.08.2016
(51) Int. Cl.: B24B 53/053

(54) **BEARBEITUNGSKOPF MIT WUCHTEINRICHTUNG**
MACHINING HEAD WITH IMPACT DEVICE
TETE D'USINAGE DOTEE D'UN DISPOSITIF D'EQUILIBRAGE

(30) Priorität: 05.10.2015 DE 102015012818
(43) Veröffentlichungstag der Anmeldung: 12.04.2017
(73) Patentinhaber: Liebherr-Verzahntechnik GmbH, 87437 Kempten (DE)
(72) Erfinder: Plessing, Matthias, 87437 Kempten (DE)
(74) Vertreter: Laufhütte, Dieter

(56) Entgegenhaltungen:
- EP-A1- 2 347 847
- EP-A1- 2 717 032
- EP-A2- 2 759 364

## Beschreibung

Die vorliegende Erfindung betrifft einen Bearbeitungskopf für eine Verzahnmaschine gemäß dem Oberbriff des Anspruchs 1, vorzugsweise eine Verzahnungsschleifmaschine. Werkzeuge, speziell abrichtbare Schleifwerkzeuge, müssen zur Erzielung hochwertiger Arbeitsergebnisse ausgewuchtet werden. Je nachdem ob der Werkzeugdorn ein oder mehrere scheibenförmigen Werkzeuge und/oder ein oder mehrere zylindrische Werkzeuge aufweist, müssen diese in einer oder zwei Wuchtebenen ausgewuchtet werden.
Unwuchten sind umlaufende Kräfte, die bei sich drehenden Körpern entstehen, wenn deren Massen unsymmetrisch um einen Mittelpunkt herum verteilt sind. Rotiert ein Körper um eine Drehachse, entstehen stets nach außen wirkende Fliehkräfte. Ist die Masse im Rotationskörper gleichmäßig verteilt, heben sich die Fliehkräfte gegenseitig auf und der Körper bleibt während der Rotation an Ort und Stelle. Ist die Masse dagegen ungleichmäßig verteilt, wirken zusätzliche Kräfte und Momente auf den Körper, die eine Relativbewegung des Rotationskörpers zur Drehachse verursachen. Ist der Körper fixiert, kommt es zu einer Belastung der Lagerung.

Es gibt zwei Formen der Unwucht, die auch in Kombination auftreten können, nämlich statische und dynamische Unwuchten. Stellt man sich den Massekörper als schmale Scheibchen mit der Masse mi vor, so befinden sich die Schwerpunkte im gleichen Abstand ri und in der gleichen Richtung zur Drehachse. Bei einer statischen Unwucht hat das zur Folge, dass der Schwerpunkt des Rotationskörpers nicht auf der Drehachse liegt, sondern die zentrale Hauptträgheitsachse parallel im Abstand e zur Drehachse liegt. Somit wirken bei Rotation Fliehkräfte senkrecht zur Drehachse, die nicht mehr ausgeglichen werden. Es entsteht die Unwucht Ui, die als Produkt aus der Punktmasse mi und deren Abstand ri von der Drehachse definiert ist. Bereits im Stillstand lässt sich diese statische Unwucht messen, z.B. mit einer Auswuchtwaage für Schleifscheiben.

Bei der dynamischen Unwucht liegt der Schwerpunkt des Rotationskörpers zwar auf der Drehachse, die Hauptträgheitsachse ist aber nicht parallel, sondern in einem bestimmten Winkel zur Drehachse. Der Grund dafür ist, dass der Schwerpunkt der einzelnen Scheiben nicht auf der Drehachse liegt. Diese kleinen Scheiben haben daher, jedes für sich betrachtet, eine Unwucht erzeugende Fliehkräfte. Die Unwuchtkräfte addieren sich zwar zu Null, d.h. es entstehen keine Kräfte in seitlicher Richtung, da sie aber auf parallelen Wirkungslinien liegen, führen sie zu einer Momentenbelastung des Rotationskörpers. Bei der Rotation entsteht deshalb ein sogenanntes Biegemoment. Es kommt in Folge dessen zu einer ungleichmäßigen, taumelnden Drehbewegung. Die dynamische Unwucht ist nur bei einem sich drehenden Rotationskörper messbar. Bei technischen Rotationskörpern liegt meist eine allgemeine dynamische Unwucht vor, d.h. eine Kombination aus statischer und dynamischer Unwucht.

Eine Unwucht bei Werkzeughaltern entsteht, wenn Konstruktions-, Zeichen-, Material-, Fertigungs- oder Montagefehler vorliegen. Neben den genannten Fehlern kann es weiterhin bei abrichtbaren Schleifkörpern durch unterschiedliche Materialdichten oder verschieden starke Aufnahmen von Kühlmittel durch den Schleifkörper zu Unwuchten kommen.

Werkzeuge mit einer großen Unwucht wirken sich bei der Zerspannung in mehrfacher Hinsicht negativ aus, insbesondere führen diese zu einer schlechteren Oberflächenqualität bei den bearbeiteten Werkstücken durch Vibrationen am Werkzeughalter, Schwingungen am Werkzeughalter, Einschränkung der erzielbaren Schnittgeschwindigkeit, abnehmende Fertigungsgenauigkeit oder Verkürzung der Standzeit der Werkzeuge durch ungleichmäßige Schneidenabnutzung.

Um diese negativen Auswirkungen zu vermeiden, empfiehlt es sich, den Werkzeughalter oder besser noch den Werkzeughalter mit eingespanntem Werkzeug entsprechend technisch machbarer und wirtschaftlich sinnvoller Wuchtgüte auszuwuchten. Beim Auswuchten wird die unsymmetrische Masseverteilung des Werkzeughalters kompensiert, indem entweder Masse angebracht, Masse entfernt oder Masse verschoben wird. Ziel des Auswuchtens ist es, Lagerkräfte, Lagerschwingungen und Wellenverformungen auf akzeptable Werte zu begrenzen.

Um eine Unwucht auszugleichen, muss diese zunächst mit Messverfahren analytisch ermittelt werden. Mittels Schwingungsaufnehmer werden die auftretenden Fliehkräfte gemessen und die Unwucht sowie der notwendige Unwuchtausgleich berechnet. Mit Daten werden dann die notwendigen Anpassungen am Werkzeugsystem durchgeführt. Ausgewuchtet werden solche Werkzeuge entweder auf einer separaten Wuchtmaschine und/oder aber auf der Bearbeitungsmaschine selbst. Werkzeuge, die auf einer Bearbeitungsmaschine abgerichtet werden, ändern durch den Abrichtvorgang auch ihren Wuchtzustand. Daher ist es in diesem Fall auf jeden Fall vorteilhaft, diese Werkzeuge noch auf der Bearbeitungsmaschine auszuwuchten.

Die EP 1 870 198 A1 zeigt ein Wuchtsystem zum Auswuchten einer Schleifscheibe, das unmittelbar unter dem Schleifwerkzeug im Werkzeugdorn angeordnet ist. Über eine entsprechende Sensorik wird der Wuchtzustand des Werkzeuges erfasst und durch eine Verarbeitungseinheit ausgewertet. Als Ergebnis der Auswertung werden Steuersignale an die Wuchteinheit ausgegeben, um die Wuchtgewichte entsprechend zu verstellen.
Diese Ausführungsform ist für breite Werkzeuge und große Schneckendurchmesser nach dem Stand der Technik gut geeignet, da die Werkzeugbohrung ausreichen dimensioniert ist, und der Werkzeugdorn ausreichend Platz für die Unterbringung der Wuchtköpfe bietet. Je kleiner der verfügbare Platz ist, desto kleiner sind die verwendeten Wuchtgewichte und die maximal kompensierbare Unwucht verringert sich. Aber gerade bei schnelldrehenden Werkzeugen müssen oftmals große Unwuchten korrigiert werden.
Sollen ferner kollisionsbehaftete Werkstücke bearbeitet werden, ist der Einsatz von Schleifschnecken mit sehr kleinem Durchmesser bzw. Schleifscheiben mit sehr kleinem Schleifscheibendurchmesser oder einer Kombination aus beiden notwendig. Hier stößt dieses System allgemein an seine Grenzen, da der Werkzeugdorn zur Aufnahme der Schleifwerkzeuge einen gewissen Mindestdurchmesser zur Aufnahme des Wuchtkopfes aufweisen muss.
Aus der EP 2 347 847 A1 ist ein Verfahren zum Schleifen eines Werkstückprofils mittels einer Verzahnungsschleifmaschine bekannt. Die EP 2 347 847 A1 offenbart einen Bearbeitungskopf gemäß dem Oberbegriff des Anspruchs 1.

Das Ziel der vorliegenden Anmeldung besteht darin, eine neuartige Konstruktion eines Bearbeitungskopfes für eine Verzahnmaschine aufzuzeigen, der ein Wuchtsystem für kleindimensionierte Werkzeuge bzw. Werkzeugdorne umfasst, um auf diesem Wegen insbesondere kollisionsbehaftete Werkstücke zu verzahnen oder zu bearbeiten. Diese kleinen Werkzeugdurchmesser werden dann gewählt, wenn andernfalls ein zu großer Werkzeugdurchmesser zu einer ungewollten Kollision zwischen dem Werkzeug und an die Verzahnung angrenzenden Durchmessern oder weiteren Verzahnungen am Werkstück führen würde.

Gelöst wird diese Aufgabe durch einen Bearbeitungskopf mit den Merkmalen des Anspruchs 1. Vorteilhafte Ausgestaltungen des Bearbeitungskopfes sind Gegenstand der sich an den Hauptanspruch anschließenden abhängigen Ansprüche.

Erfindungsgemäß wird ein Bearbeitungskopf für eine Verzahnmaschine vorgeschlagen, der wenigstens eine angetriebene Motorspindel zur Aufnahme eines Werkzeugdornes umfasst. Eine Wuchteinrichtung zur Korrektur etwaiger Unwuchten des aufgenommenen Werkzeuges ist erfindungsgemäß innerhalb der angetriebenen Motorspindel integriert. Der Werkzeugdorn ist beidseitig aufgenommen, d.h. einerseits durch die Motorspindel und andererseits durch eine gegenüberliegend angeordnete Gegenspindel. Auch die Gegenspindel umfasst eine integrierte Wuchteinrichtung. Die Wuchteinrichtungen der Motorspindel und der Gegenspindel umfassen vorzugsweise Wuchtgewichte bzw. Wuchtköpfe, deren Position zur Kompensation einer Unwucht verstellbar ist. D.h. die auf die Motorspindel und die Gegenspindel verteilten Komponenten können ein gemeinsames 2-Ebenen-Wuchtsystem zur Kompensation einer Unwucht bilden.

Die Wuchteinrichtungen der Motorspindel und der Gegenspindel sind dabei vollständig oder zumindest nahezu vollständig innerhalb des Gehäuses der Motorspindel bzw. der Gegenspindel eingefasst. Beispielsweise kann die Wuchteinrichtung der Motorspindel innerhalb des Rotors angeordnet sein, während die Wuchteinrichtung der Gegenspindel innerhalb der dort drehbar gelagerten Spindelwelle liegt.

Die Integration der Wuchteinrichtung in die Motorspindel bzw. Gegenspindel erlaubt die Aufnahme verschiedener Werkzeugdorne bzw. die Verwendung unterschiedlicher Werkzeuge unabhängig von deren Durchmesser. Dadurch lassen sich auch Werkzeuge, insbesondere Schleifscheiben oder Schleifschnecken, mit sehr kleinem Durchmesser verwenden, um insbesondere kollisionsbehaftete Werkstücke zu verzahnen. Der minimale Werkzeugbohrungsdurchmesser hängt dabei von der zu erreichenden erforderlichen Wuchtkapazität ab. Je größer die erforderliche Kapazität, umso größer muss die Aufnahmebohrung für das Wuchtsystem ausfallen. Dabei sind beispielsweise Werkzeugbohrungsdurchmesser unter 50 mm nicht mehr geeignet, um ein konventionelles Wuchtsystem nach dem Stand der Technik in den Werkzeugdorn zu integrieren.

Durch die Integration der Wuchteinrichtungen innerhalb der Motorspindel bzw. Gegenspindel wird nicht nur der Einsatz unterschiedlicher Werkzeugdorne mit besonders kleinem Durchmesser ermöglicht, sondern es entfallen auch etwaige Störkante, die durch die Anordnung der Wuchteinrichtungen an bzw. um den Werkzeugdorn möglicherweise entstehen. Insbesondere beeinflussen die integrierten Wuchteinrichtungen nicht den möglichen Vershiftweg des Werkzeuges bzw. des Werkzeugdornes in V-Richtung, d.h. entlang der Drehachse des Werkzeuges. Dies ist insbesondere bei der Verzahnbearbeitung bzw. Verzahnschleifbearbeitung von Vorteil, da hier durch eine Vershiftung in Richtung der V-Achse unterschiedliche Bereiche eines Werkzeuges mit dem Werkstück in Eingriff gebracht werden. Ebenfalls ist es denkbar, mehrere gleiche oder auch unterschiedliche Werkzeuge auf dem Werkzeugdorn anzuordnen, so z.B. eine Schleifscheibe oder eine Schleifschnecke, die abwechselnd per Shiftbewegung mit dem Werkstück in Eingriff gebracht werden können. Die vollständige Integration der Wuchteinrichtungen innerhalb der Motorspindel bzw. der Gegenspindel beeinflusst die maximale Shiftbewegung nicht.

Die Wuchteinrichtungen der Motorspindel und/oder Gegenspindel können jeweils beispielsweise ein oder mehrere Wuchtgewichte umfassen, die in Radialrichtung der jeweiligen Spindel verstellbar sind, sodass in Abhängigkeit der gemessenen Schwingungen eine Kompensation durch radiale Verschiebung der Wuchtgewichte erfolgen kann. Denkbar ist ebenfalls eine Ausführung mit mehreren radial angeordneten Kammern mit unterschiedlichen Flüssigkeitsmengen. Durch gesteuerte Variation des Füllstands der Flüssigkeitskammern kann der Wuchtzustand der Spindeln verändert werden.

Eine alternative Ausführungsform der Wuchteinrichtung kann auf wenigstens einem Wuchtgewicht pro Wuchteinrichtung/Wuchtebene basieren, welches elektromechanisch mittels wenigstens eines Motors um die Mittelachse verstellbar ist. Dadurch lässt sich ein Auswuchten in zwei Wuchtebenen realisieren.

Besonders bevorzugt ist eine Anordnung der Wuchteinheit innerhalb der Motorspindel bzw. der Gegenspindel hinter bzw. unter dem vorderen Spindellager. Das vordere Spindellager entspricht dem Lager, das räumlich näher am Werkzeugdorn angeordnet ist.

Zur Erfassung etwaiger Unwuchten ist wenigstens ein Schwingungsaufnehmer, vorzugsweise wenigstens ein Beschleunigungssensor, vorgesehen, idealerweise ein Schwingungsaufnehmer je Wuchtebene und damit jeweils einer für die Motorspindel und ein weiterer Schwingungsaufnehmer für die Gegenspindel. Die Schwingungsaufnehmer dienen zur Aufzeichnung der Schwingungen bei der Verzahnbearbeitung, idealerweise Schwingungen des Gesamtsystems aus Werkzeugdorn, aufgenommenen Werkzeugen und Spindeln. Vorzugsweise sind die Schwingungsaufnehmer kommunikativ mit einer Steuerung verbindbar. Die Steuerung ermittelt aus den Schwingungssignalen Steuerimpulse zur Einstellung der Wuchtsysteme, die über Signalgeber berührungslos in die Wuchteinheiten übermittelt werden müssen.

Es können ein oder mehrere Signalgeber vorgesehen sein, um das in der Steuerung bestimmte Korrektursignal an die Wuchteinheit zurückzugegeben, nachdem die Unwuchtsignale innerhalb der Steuerung in Korrekturwerte umgerechnet wurden. Die Signalgeber können beispielsweise am hinteren Ende, d.h. an dem dem Werkzeugdorn gegenüberliegenden Ende der Motorspindel bzw. der Gegenspindel angeordnet sein.

Insbesondere kann der Bearbeitungskopf derart ausgeführt sein, dass der Abstand zwischen Gegenspindel und Motorspindel variabel einstellbar ist. Dadurch kann der Bearbeitungskopf für unterschiedliche Werkzeuglängen verwendbar sein, indem dieser variabel je nach Werkzeuglänge bzw. Werkzeugdornlänge verstellbar ist. Diese flexible Konfigurationsmöglichkeit entsteht erst dadurch, dass die Wuchteinrichtung in der Motorspindel bzw. der Gegenspindel eingefasst ist und nicht am oder im Werkzeugdorn selbst angebracht ist.

Der Bearbeitungskopf ist insbesondere für sehr kleine Schleifscheiben bzw. kleine Schleifschnecken dimensioniert. Derart kleindimensionierte Werkzeuge werden vorzugsweise mit hohen Drehzahlen betrieben. Demnach ist die Motorspindel vorzugsweise für eine Spindeldrehzahl von mehr als 8.000 Umdrehungen pro Minute pro Minute konstruiert.

Neben dem Bearbeitungskopf betrifft die vorliegende Erfindung ebenfalls eine Verzahnmaschine zum Schleifen von Verzahnungen mit wenigstens einem Bearbeitungskopf gemäß der vorliegenden Erfindung bzw. einer vorteilhaften Ausgestaltung der Erfindung. Die Verzahnmaschine zeichnet sich folglich durch dieselben Vorteile und Eigenschaften wie der erfindungsgemäße Bearbeitungskopf aus, weshalb an dieser Stelle auf eine wiederholende Beschreibung verzichtet wird.

Die Verzahnmaschine umfasst wenigstens eine Steuerung, die kommunikativ mit ein oder mehreren Schwingungsaufnehmern und Signalgebern des Bearbeitungskopfes oder einer entsprechenden Auswerteelektronik verbindbar ist. Insbesondere ist die Steuerung geeignet, ein oder mehrere Schwingungsparameter von den Schwingungsaufnehmern zu empfangen und in Abhängigkeit der empfangenen Schwingungsparameter entsprechende Stellwerte für die Wuchteinrichtungen der Motorspindel und/oder Gegenspindel zu generieren. Idealerweise werden die Stellparameter ebenfalls in Abhängigkeit der aktuellen Spindeldrehzahl der Motorspindel und/oder der aktuellen Winkellage der Motorspindel/Gegenspindel generiert, um mittels der Schwingungsaufnehmer erfasste Unwuchten zu kompensieren.

Weitere Vorteile und Eigenschaften der Erfindung sollen im Folgenden anhand diverser Ausführungsbeispiele näher erläutert werden.

Es zeigen:
- Figur 1:: ein Bearbeitungskopf nach dem Stand der Technik,
- Figur 2a:: eine Querschnittsdarstellung des erfindungsgemäßen Bearbeitungskopfes;
- Figur 2b:: der Bearbeitungskopf gemäß Figur 2a mit einem kleindimensionierten Schleifwerkzeug;
- Figur 3a:: eine weitere Darstellung des erfindungsgemäßen Bearbeitungskopfes mit einem alternativen Schleifwerkzeug;
- Figur 3b:: eine weitere Darstellung des erfindungsgemäßen Bearbeitungskopfes mit einer alternativen Werkzeugkonfiguration;
- Figur 3c:: eine Darstellung des erfindungsgemäßen Bearbeitungskopfes mit einer Mehrfachbestückung des Werkzeugdorns mit unterschiedlichen Schleifscheiben und
- Figur 4:: eine weitere Darstellung des erfindungsgemäßen Bearbeitungskopfes zur Verdeutlichung etwaiger Störkanten bei der Verzahnbearbeitung.

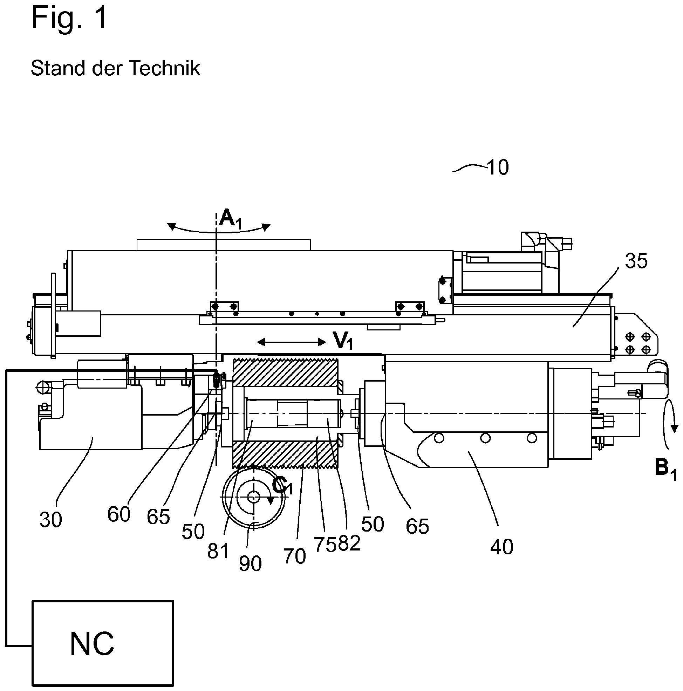

Zu Beginn soll noch mal anhand der Figur 1 auf ein konventionelles Ausführungsbeispiel des Standes der Technik eingegangen werden. Die Figur 1 zeigt einen Schleifkopf 10 einer Maschine nach dem Stand der Technik zur Aufnahme von Schleifschnecken mit einer Auswuchteinrichtung. Der Antrieb des Werkzeuges, in diesem Fall eine Schleifschnecke 70, erfolgt bei dem Ausführungsbeispiel über die Motorspindel 40, welche als NC-Achse (B1-Achse) ausgeführt ist. Das Werkzeug 70 ist dabei zwischen der Motorspindel 40 und dem Gegenlager 30 über die Werkzeugaufnahmeschnittstellen 50 eingespannt.

In jeder Spindel, Motorspindel 40 und Gegenlager 30, ist ein separater Schwingungsaufnehmer 65 integriert über den die, für die jeweilige Schwingungsebenen relevanten Signale aufgezeichnet werden. Die aufgezeichneten Schwingungssignale werden in der Steuerung (NC) zusammen mit den Daten zur Winkellage und Drehzahl der Motorspindel ausgewertet und in Korrekturwerte umgerechnet, die anschließend über die Datenschnittstelle 60 an die im Werkzeugdorn 75 angeordneten Zwei-Ebenen-Wuchtköpfe 81,82 als Einstellwerte geschickt werden.

Diese Ausführungsform ist für breite Werkzeuge 70 und große Schneckendurchmesser nach dem Stand der Technik gut geeignet, da die Werkzeugbohrung ausreichend dimensioniert ist um den Werkzeugdorn mit der Wuchteinrichtung 81, 82 aufzunehmen. Sollen nun aber kollisionsbehaftete Werkstück bearbeitet werden, ist der Einsatz von Schleifschnecken mit kleinerem Durchmesser, kleineren Schleifscheibendurchmessern oder einer Kombination aus beidem notwendig. Hier stößt dieses System an seine Grenzen, da der Werkzeugdorn 75 zu Aufnahme der Schleifwerkzeuge dann kleiner als der erforderliche Mindestdurchmesser zur Aufnahme des Wuchtkopfes 81, 82 ist.

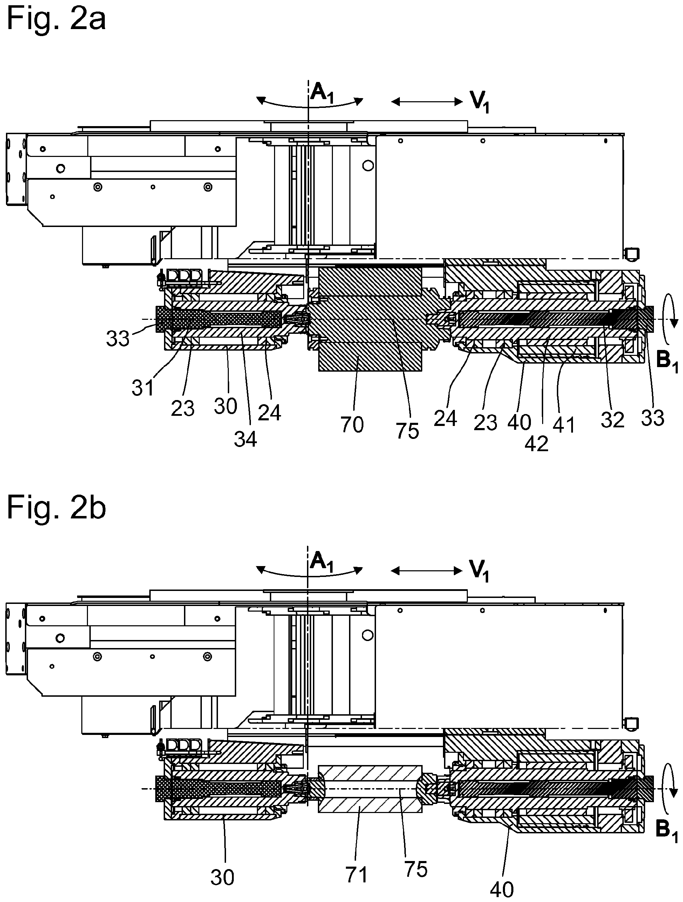

In der Fig. 2a wird ein Bearbeitungskopf gemäß der Erfindung gezeigt. Eine Schleifschnecke 70 sitzt auf einem Werkzeugdorn 75, die ebenfalls über Schnittstellen zwischen einer Motorspindel 40 mit einem Antriebsmotor 41 und einer Gegenspindel 30 eingespannt ist. Je nach Werkzeuglänge oder Länge des Werkzeugaufnahmedornes 75 wird die Gegenspindel 30 entsprechend in ihrer Position eingestellt, indem diese in V1-Richtung versetzt bzw. verschoben wird. Eine Anpassung des Werkzeugschwenkwinkels erfolgt über die A1-Achse. Damit wird die Werkzeuglage an den Schrägungswinkel der Verzahnung und bei schneckenförmigen Werkzeugen zusätzlich an deren Steigungswinkel angepasst. Bei der Verzahnungsbearbeitung kommt es aus Qualitätsgründen immer auf eine optimale Lageabhängigkeit zwischen Werkzeug und dem Werkstück (C1-Achse) bzw. der bearbeiteten Zahnlücke an. Aus diesem Grund erfolgen die Achsbewegungen mittels NC-Achsen lageorientiert zueinander. Über die V1-Achse kann das Werkzeug tangential zum Werkstück verfahren (vershiftet) werden. Damit kann das Werkzeug über seine gesamte Breite genutzt werden, vorausgesetzt es liegt keine Störkontur vor.

Die Wuchtköpfe 31, 32 der Wuchteinrichtungen liegen innerhalb des Gehäuses der Motorspindel 40 und des Gehäuses der Gegenspindel 30. Insbesondere sind diese innerhalb des Rotors 42 der Motorspindel 40 und der drehbaren Welle 34 der Gegenspindel 30 positioniert. Rotor 42 und Welle 34 sind jeweils über Spindellager 23, 24 in ihrem Gehäuse gelagert. Mit Hilfe von wenigstens einem Schwingungsaufnehmer pro Motor- und Gegenspindel 30, 40 werden Schwingungssignale aufgezeichnet und an die Steuerung der Verzahnmaschine übertragen. Die aufgezeichneten Schwingungssignale werden dann in der Steuerung (NC) zusammen mit den Daten zur Winkellage und Drehzahl der Motorspindel 40 ausgewertet und in Korrekturwerte umgerechnet, die anschließend über eine Datenschnittstelle an die in der Motorspindel 40 und der Gegenspindel angeordneten Zwei-Ebenen-Wuchtköpfe 31,32 als Einstellwerte geschickt werden.

Bei dem hier verwendeten Werkzeugdorn 75 wäre die Anordnung einer Wuchteinheit innerhalb des Dornes 75 auf Grund des hier eingesetzten Werkzeugdorndurchmessers kein Problem, anders sieht es hingegen beim Einsatz eines Werkezugdorns 75 gemäß der Figur 2b aus. Die Figuren 2b, 3a, 3b, 3c und 4 zeigen den erfindungsgemäßen Bearbeitungskopf der Figur 2a, jedoch mit Verwendung unterschiedlicher Werkzeugdorne 75 für unterschiedliche Schleifprozesse.

In Figur 2b wird eine Schleifschnecke 71 mit kleinem Außendurchmesser auf einem Werkzeugdorn 75 mit entsprechend kleinerem Durchmesser aufgesetzt. Diese Schleifschnecken 71 werden eingesetzt wenn, bedingt durch eine Kollisionskontur am Werkstück, der Schneckendurchmesser 71 reduziert werden muss, damit das Werkstück trotz Störkontur noch wälzgeschliffen werden kann. Bei diesem Durchmesser oder sogar noch kleineren Werkzeugdorndurchmessern ist innerhalb des Dornes 75 kein Platz mehr für eine entsprechende Wuchteinheit, vor allem wenn noch eine ausreichende Wuchtkapazität zur Verfügung gestellt werden soll.

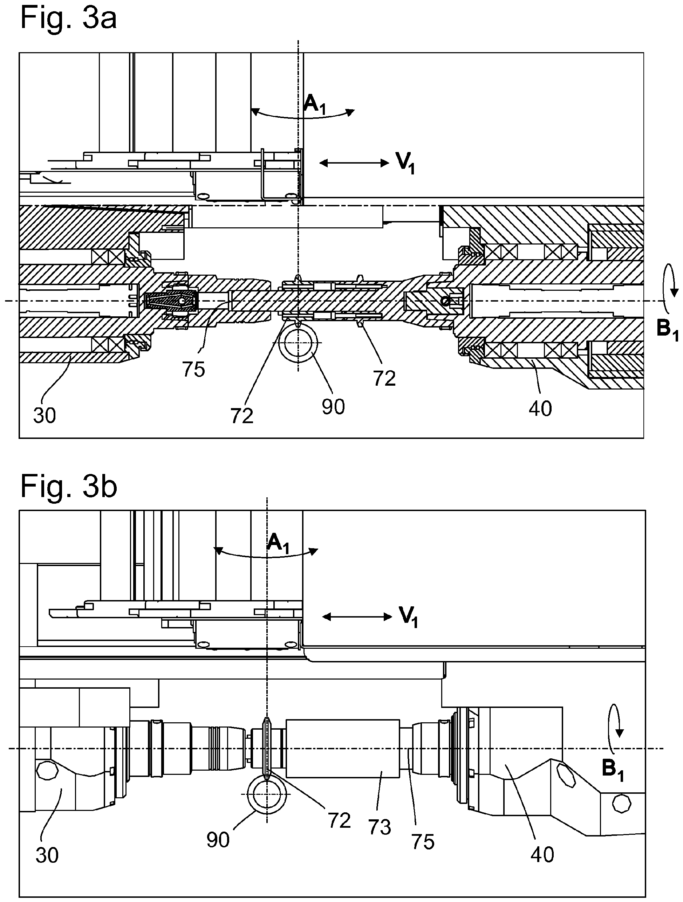

In der Fig. 3a wird eine Anwendung von sehr kleinen Schleifscheibendurchmessern gezeigt wie sie häufig für die Verzahnung von Werkstücken 90 mit sehr kleinen Werkstückdurchmessern, insbesondere mit Störkonturen, verwendet werden. Das in der Fig. 3b gezeigt Kombiwerkzeug aus Schleifschnecke 73 und Schleifscheibe 72 dient ebenfalls der Bearbeitung von Werkstücken 90 mit sehr kleinen Werkstückdurchmessern mit Störkontur. Mit der Schleifschnecke 73 wird in diesem Fall die Schruppbearbeitung vorgenommen, die damit deutlich schneller als eine Einzelbearbeitung jeder Zahnlücke mit einer Schleifscheibe 72 erfolgen kann. Die Qualitätsanforderung der Verzahnung, vor allem die Oberflächenrauigkeit an der Zahnflanke, wird dann mit der Bearbeitung mit einer Schlichtscheibe 72 oder einem Schlichtscheibenpaket erzielt.

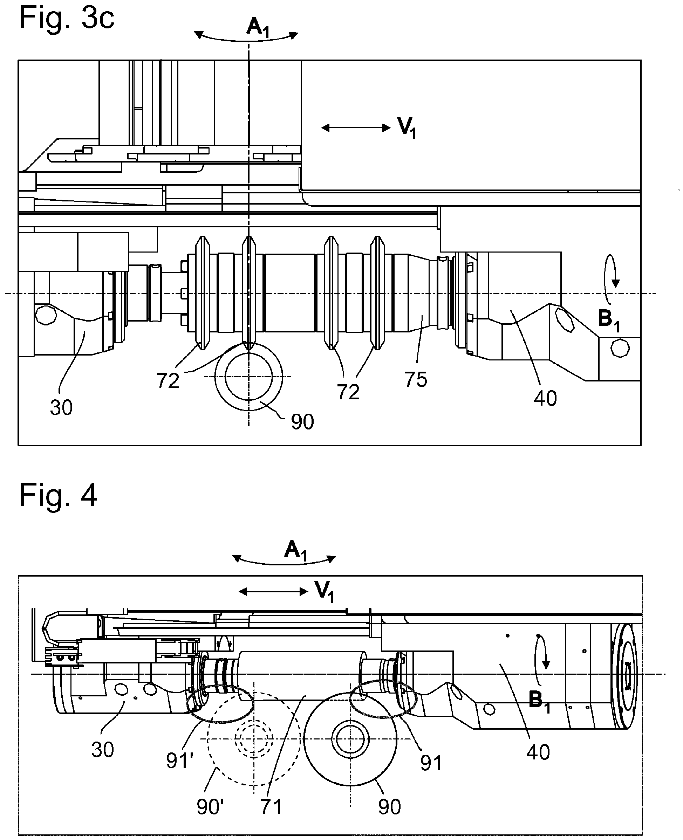

Fig. 3c zeigt einen Werkzeugdorn mit vier separaten Schleifscheiben 72, wie es häufig bei Doppelverzahnungen eingesetzt wird. Dabei wird je ein Scheibenpaar 72 zur Bearbeitung einer Verzahnung eingesetzt. Dabei handelt es sich dann meist um eine Schrupp- und Schlichtscheibe. Genauso wäre aber auch die Verwendung von Scheibenpaketen, sogenannte Satzscheiben, möglich

Die Figur 4 stellt eine Besonderheit von Verzahnmaschinen gegenüber sonstigen Werkzeugmaschinen dar. Bei Verzahnmaschinen und schneckenförmigen Werkzeugen 71 wird das gesamte Werkzeug 71 über seine Breite genutzt. Meist wird, nachdem ein Werkstück bearbeitet wurde, das Werkzeug 71 um einen bestimmten Wert in V1-Richtung verschoben / vershiftet. Mit diesem Verfahren erzielt man eine gleichmäßiger Abnutzung des Werkzeugs 71 bzw. beim Trockenwälzfräsen eine gleichmäßiger Werkzeugerwärmung.

Beim Schleifen wird zur Erzielung bestimmter Geometrien am Werkstück 90 teilweise ein besonders modifiziertes Werkzeug 71 diagonal verfahren, während das Werkstück 90 bearbeitet wird. Daraus ergibt sich der Umstand, dass gerade in den Werkzeugrandbereichen, je nach Schrägungswinkel der Verzahnung Haupt- und Gegenlager 30, 40 als zusätzlich Störkontur berücksichtigt werden müssen. Die beiden Bereiche 91 stellen den Bereich dar, der möglichst frei von Störkonturen bleiben sollte. Dabei muss aber aus Gründen der Werkzeugdornstabilität darauf geachtet werden, das besonders bei dünnen Werkzeugen 71, 72 oder dünnen Werkzeugdornen 75 diese nicht zu lang werden, um eine ausreichende Stabilität aufzuweisen. Eine Übertragungseinheit zum Datenaustausch von Informationen zwischen der Steuerung und der Wuchteinheit im Dorn, wie es bei Maschinen nach dem Stand der Technik bekannt ist, würde hier bei kleinen Werkzeug- und Werkstückdurchmessern sehr stören und den zulässigen Shiftbereich einschränken, da für die Drehübertragung ein entsprechender Bauraum radial um den Werkzeugdorn herum vorgesehen werden muss.

## Patentansprüche

1. Bearbeitungskopf für eine Verzahnmaschine mit wenigstens einer angetriebenen Motorspindel (40) und wenigstens einer Gegenspindel (30), wobei ein Werkzeugdorn (75) mit wenigstens einem darauf angeordnetem Werkzeug (70, 71, 72, 73) zwischen der Motorspindel (40) und der Gegenspindel (30) aufgenommen ist,
**dadurch gekennzeichnet,**
**dass** eine Wuchteinrichtung (32) innerhalb der angetriebenen Motorspindel (40) und eine Wuchteinrichtung (31) innerhalb der Gegenspindel (30) integriert und vollständig oder nahezu vollständig in das Gehäuse der Motorspindel (40) bzw. Gegenspindel (30) eingebracht sind.

2. Bearbeitungskopf nach Anspruch 1, **dadurch gekennzeichnet, dass** die jeweilige Wuchteinrichtung (31, 32) in den Rotor (42) der Motorspindel (40) bzw. in die Welle (34) der Gegenspindel (30) integriert ist.

3. Bearbeitungskopf nach einem der vorhergehenden Ansprüche, **dadurch gekennzeichnet dass** die Wuchteinrichtung (31, 32) der Motorspindel (40) und/oder der Gegenspindel (30) eine Zwei-Ebenen-Wuchteinrichtung ist.

4. Bearbeitungskopf nach eine der vorhergehenden Ansprüche, **dadurch gekennzeichnet, dass** die Wuchteinrichtung (31, 32) innerhalb der Motorspindel (40) und/oder Gegenspindel (30) hinter bzw. unter dem vorderen Spindellager (23, 24) der Motorspindel (40) bzw. der Gegenspindel (30) angeordnet ist.

5. Bearbeitungskopf nach einem der vorhergehenden Ansprüche, **dadurch gekennzeichnet, dass** in der Motorspindel (40) und/oder Gegenspindel (30) wenigstens ein Schwingungsaufnehmer zur Aufzeichnung der Schwingungen bei der Verzahnbearbeitung vorgesehen ist, wobei der oder die Schwingungsaufnehmer vorzugsweise mit einer Steuerung (NC) einer Verzahnmaschine kommunikativ verbindbar sind.

6. Bearbeitungskopf nach Anspruch 5, **dadurch gekennzeichnet, dass** Signalgeber zur Verstellung der Wuchteinrichtung (31, 32) vorgesehen sind, die vorzugsweise am hinteren Ende der Motorspindel (40) / Gegenspindel (30) angeordnet sind.

7. Bearbeitungskopf nach einem der vorhergehenden Ansprüche, **dadurch gekennzeichnet, dass** der Abstand zwischen Gegenspindel (30) und Motorspindel (40) variabel je nach Werkzeuglänge bzw. Werkzeugdorn (75) einstellbar ist.

8. Bearbeitungskopf nach einem der vorhergehenden Ansprüche, **dadurch gekennzeichnet, dass** auf dem Werkzeugdorn (75) Werkzeuge (70, 71, 72, 73) mit kleinen Werkzeugdurchmesser aufnehmbar sind, insbesondere kleine Schleifscheiben und/oder kleine Schleifschnecken und/oder eine Kombination aus wenigstens einer Schleifschnecke und wenigstens einer Schleifscheibe.

9. Bearbeitungskopf nach einem der vorhergehenden Ansprüche, **dadurch gekennzeichnet, dass** die Motorspindel (40) mit einer Spindeldrehzahl von mehr als 8.000U/min betreibbar ist.

10. Bearbeitungskopf nach einem der vorhergehenden Ansprüche, dass in oder am Werkzeugdorn (75) keine Bestandteile der Wuchteinrichtung (31, 32) angeordnet sind.

11. Verzahnmaschine zum Schleifen von Verzahnungen mit einem Bearbeitungskopf gemäß einem der vorhergehenden Ansprüche.

12. Verzahnmaschine nach Anspruch 11, **dadurch gekennzeichnet, dass** die Verzahnmaschine eine Steuerung (NC) umfasst, wobei die Steuerung (NC) Schwingungsparameter von dem oder den Signalgebern des Bearbeitungskopfes empfängt und in Abhängigkeit der empfangenen Schwingungsparameter und vorzugsweise der aktuellen Spindeldrehzahl und/oder Winkellage der Motorspindel (40) Stellwerte für die Wuchteinrichtungen (31, 32) generiert um Unwuchten des Schleifwerkzeuges (70, 71, 72, 73) zu kompensieren.

## Claims

1. A machining head for a gear manufacturing machine having at least one driven motor spindle (40) and at least one counter-spindle (30), wherein a tool arbor (75) having at least one tool (70, 71, 72, 73) arranged thereon is mounted between the motor spindle (40) and the counter-spindle (30),
**characterized in that**
a balancing device (32) is integrated within the driven motor spindle (40) and a balancing device (31) is integrated within the counter-spindle (30) and are completely or almost completely introduced into the housing of the motor spindle (40) or counter-spindle (30).

2. A machining head in accordance with claim 1, **characterized in that** the respective balancing device (31, 32) is integrated into the rotor (42) of the motor spindle (40) or into the shaft (34) of the counter-spindle (30).

3. A machining head in accordance with one of the preceding claims, **characterized in that** the balancing device (31, 32) of the motor spindle (40) and/or of the counter-spindle (30) is a two-plane balancing device.

4. A machining head in accordance with one of the preceding claims, **characterized in that** the balancing device (31, 32) is arranged within the motor spindle (40) and/or counter-spindle (30) behind or below the front spindle bearing (23, 24) of the motor spindle (40) or of the counter-spindle (30).

5. A machining head in accordance with one of the preceding claims, **characterized in that** at least one vibration sensor is provided in the motor spindle (40) and/or counter-spindle (30) for recording the vibrations during gear manufacturing machining, with the vibration sensor or sensors preferably being communicationally connectable to a control (NC) of a gear manufacturing machine.

6. A machining head in accordance with claim 5, **characterized in that** signal transmitters for adjusting the balancing device (31, 32) are provided, which are preferably arranged at the rear end of the motor spindle (40) / counter-spindle (30).

7. A machining head in accordance with one of the preceding claims, **characterized in that** the distance between the counter-spindle (30) and the motor spindle (40) is variably adjustable depending on the tool length or on the tool arbor (75).

8. A machining head in accordance with one of the preceding claims, **characterized in that** tools (70, 71, 72, 73) having small tool diameters are receivable on the tool arbor (75), in particular small grinding wheels and/or small grinding worms and/or a combination of at least one grinding worm and at least one grinding wheel.

9. A machining head in accordance with one of the preceding claims, **characterized in that** the motor spindle (40) is operable at a spindle speed of more than 8,000 r.p.m.

10. A machining head in accordance with one of the preceding claims, **characterized in that** no components of the balancing device (31, 32) are arranged in or at the tool arbor (75).

11. A gear manufacturing machine for grinding gearings having a machining head in accordance with one of the preceding claims.

12. A gear manufacturing machine in accordance with claim 11, **characterized in that** the gear manufacturing machine comprises a control (NC), with the control (NC) receiving vibration parameters from the signal transmitter or transmitters of the machining head and generating adjustment values for the balancing devices (31, 32) in dependence on the received vibration parameters and preferably on the current spindle speed and/or on the angular position of the motor spindle (40), to compensate imbalances of the grinding tool (70, 71, 72, 73).

## Revendications

1. Tête d'usinage pour une machine à tailler les engrenages pourvue d'au moins une broche à moteur (40) entraînée et d'au moins une contre-broche (30), un mandrin (75) avec au moins un outil fixé dessus (70, 71, 72, 73) étant logé entre la broche à moteur (40) et la contre-broche (30),
**caractérisée en ce que**
un dispositif d'équilibrage (32) est inséré dans la broche à moteur (40) entraînée et un dispositif d'équilibrage (31) est intégré dans la contre-broche (30), chacun d'eux étant entièrement ou presque entièrement monté dans le boîtier de la broche à moteur (40) voire de la contre-broche (30).

2. Tête d'usinage selon la revendication 1, **caractérisée en ce que** le dispositif d'équilibrage respectif (31, 32) est intégré dans le rotor (42) de la broche à moteur (40) voire dans l'arbre (34) de la contre-broche (30).

3. Tête d'usinage selon l'une quelconque des revendications précédentes, **caractérisée en ce que** le dispositif d'équilibrage (31, 32) de la broche à moteur (40) et/ou de la contre-broche (30) est un dispositif d'équilibrage à deux niveaux.

4. Tête d'usinage selon l'une quelconque des revendications précédentes, **caractérisée en ce que** le dispositif d'équilibrage (31, 32) est disposé à l'intérieur de la broche à moteur (40) et/ou de la contre-broche (30) derrière voire en-dessous du roulement de broche avant (23, 24) de la broche à moteur (40) ou de la contre-broche (30).

5. Tête d'usinage selon l'une quelconque des revendications précédentes, **caractérisée en ce qu'**au moins un capteur d'oscillations pour l'enregistrement d'oscillations lors de la taille des engrenages est prévu dans la broche à moteur (40) et/ou la contre-broche (30), le ou les capteurs d'oscillations pouvant être mis en communication principalement avec une commande (CN) d'une machine à tailler les engrenages.

6. Tête d'usinage selon la revendication 5, **caractérisée en ce que** le générateur de signaux est prévu pour l'ajustement du dispositif d'équilibrage (31, 32) qui est disposé de préférence à l'extrémité arrière de la broche à moteur (40) ou de la contre-broche (30).

7. Tête d'usinage selon l'une quelconque des revendications précédentes, **caractérisée en ce que** la distance entre la contre-broche (30) et la broche à moteur (40) peut être réglée de manière variable suivant la longueur de l'outil et plus particulièrement le mandrin (75).

8. Tête d'usinage selon l'une quelconque des revendications précédentes, **caractérisée en ce que** le mandrin (75) peut loger des outils (70, 71, 72, 73) avec un petit diamètre, en particulier des disques abrasifs et/ou des meules à filets de petite taille et/ou une combinaison d'au moins une meule à filets et d'au moins un disque abrasif.

9. Tête d'usinage selon l'une quelconque des revendications précédentes, **caractérisée en ce que** la broche à moteur (40) peut tourner à une vitesse de broche supérieure à 8000 tr/min.

10. Tête d'usinage selon l'une quelconque des revendications précédentes **caractérisée en ce qu'**aucune pièce du dispositif d'équilibrage (31, 32) n'est placée dans ou sur le mandrin (75).

11. Machine à tailler les engrenages pour la rectification d'engrenages avec une tête d'usinage selon l'une des revendications précédentes.

12. Machine à tailler les engrenages selon la revendication 11, **caractérisée en ce que** la machine à tailler les engrenages comporte une commande (CN), ladite commande (CN) recevant des paramètres d'oscillation du ou des générateurs de signaux de la tête d'usinage et générant en fonction des paramètres d'oscillation reçus et principalement de la vitesse actuelle de la broche et/ou de la position angulaire de la broche à moteur (40), des valeurs de réglage pour les dispositifs d'équilibrage (31, 32) afin de compenser les déséquilibres de l'outil abrasif (70, 71, 72, 73).
